# EUROPEAN PATENT SPECIFICATION

(11) **EP 4 035 885 B1**
(45) Date of publication and mention of the grant of the patent: **26.02.2025**
(21) Application number: 21162607.2
(22) Date of filing: 15.03.2021
(51) Int. Cl.: B32B 1/00, B32B 7/06, B32B 7/12, B32B 27/08, B32B 27/16, B32B 27/26, B32B 27/30, B32B 27/36

(54) **COMPOSITE LIGHT-CURING PROTECTIVE FILM AND METHOD OF STICKING FILM AND USE THEREOF**
ZUSAMMENGESETZTE LICHTHÄRTENDE SCHUTZFOLIE UND VERFAHREN ZUM KLEBEN DER FOLIE UND VERWENDUNG DAVON
FILM DE PROTECTION COMPOSITE PHOTODURCISSABLE ET PROCÉDÉ DE COLLAGE DE FILM ET UTILISATION DE CE DERNIER

(30) Priority: 28.01.2021 CN 202110118168
(43) Date of publication of application: 03.08.2022
(73) Proprietor: Shenzhen Kangchengtai Industrial Co., Ltd., Shenzhen, Guangdong 518000 (CN)
(72) Inventor: CHEN, Li, Shenzhen, Guangdong, 518000 (CN)
(74) Representative: Lewis Silkin LLP

(56) References cited:
- US-A1- 2016 176 169
- US-A1- 2020 115 592

## Description

### TECHNICAL FIELD

The present disclosure relates to the technical field of film layers, and specifically relates to a composite light-curing protective film and method of sticking the film and use thereof.

### BACKGROUND

The screen display structure of all kinds of 3C digital products currently used in the market mostly uses glass material, and the touch structure, which causes the screen area to be the place to be used and touched the most frequently, resulting in serious problems of the screen area to be scratched, dirty, and easily broken. If the mobile phone screen cannot be effectively protected, it will seriously affect the service life of the mobile phone screen or be directly damaged.

Currently, in order to prevent the occurrence of the above problems, various types of screen protective films appear on the market, including glass protective film, TPU protective film, and PET protective film. The use of these protective films can indeed play a basic protective role, but with the different performances and shapes of the screens of mobile phones, these protective films are inadequate and limited. For example, although the glass protective film can have drop resistance and scratch resistance, it cannot solve the fingerprint unlocking problem under the mobile phone screen. TPU protective film can solve the fingerprint unlocking problem under the phone screen, but the anti-scratch effect is poor. The PET protective film has drop resistance, scratch resistance and can solve the fingerprint unlocking problem under the mobile phone screen, but it is difficult to solve the problems of bounce-back and the difficulty of sticking to a mobile phone with a curved screen.

Therefore, it is difficult for the existing screen type protective film to balance the problems of drop resistance, scratch resistance, and stable sticking to curved surfaces.

The patent documents US 2016/176169 A1 and US 2020/115592 A1 disclose protective films according to prior art.

### SUMMARY

The purpose of the present disclosure is to provide a composite light-curing protective film and a method of sticking the film, so as to solve the technical problems of the existing protective film that it is difficult to achieve drop resistance, scratch resistance, and stable sticking.

In order to solve the above technical problems, one aspect of the present disclosure provides a composite light-curing protective film. The composite light-curing protective film includes a base film layer that provides support, a light-curing functional layer, and an adhesive layer, wherein the base film layer, the light-curing functional layer, and the adhesive layer are laminated in sequence to form a sandwich structure, and the light-curing functional layer is formed by film-forming a slurry, including the following ingredients in parts by weight: modified acrylic resin 25-35 parts, polymethyl methacrylate 10-15 parts, butyl acetate 15-25 parts, ethyl acetate 15-25 parts, isopropanol 10-20 parts, photoinitiator 1-5 parts, and additives 2-4 parts.

In another aspect of the present disclosure, a film sticking method is provided, including the following steps:
sticking the adhesive layer contained in the composite light-curing protective film of the present disclosure to the surface of the film to be stuck;
peeling off the base film layer contained in the composite light-curing protective film to expose the light-curing functional layer;
subjecting the exposed light-curing functional layer to light-curing treatment.

Another aspect of the present disclosure provides a method to use the composite light-curing protective film of the present disclosure. The composite light-curing protective film of the present disclosure is used in display screens, functional glass and decorative films.

Compared with the prior art, the composite light-curing protective film of the present disclosure uses a light-curing functional layer as a functional film layer, which can effectively stick to other surfaces of the film to be stuck through the adhesive layer. In this way, the light-curing functional layer can effectively be stuck in conformity with the shape of the surface of the film. In this way, after the light-curing functional layer is cured by light, the light-curing functional layer can be effectively stuck to the surface of the film to be stuck, and the sticking stability can be ensured, without the problems of bounce-back and the difficulty of sticking. The base film layer contained in the composite light-curing protective film provides a substrate supporting effect for the light-curing functional layer on the one hand, and on the other hand can provide a mechanical effect for the light-curing functional layer to improve the convenience of surface sticking between the composite light-curing protective film and the film to be stuck, improve the sticking effect between the composite light-curing protective film and the surface to be stuck.

The film sticking method of the present disclosure directly sticks the adhesive layer contained in the composite light-curing protective film of the present disclosure to the surface of the film to be stuck, so that the light-curing functional layer can be stuck in conformity with the shape of the surface of the film to be stuck. After the photo-curing treatment, the photo-curing functional layer is cured, which will form a shape that completely matches the surface shape of the film to be stuck, thereby forming a protective film layer on the surface of the film to be stuck, and the protective film layer does not have the problems of bounce-back and the difficulty of sticking.

Since the composite light-curing protective film of the present disclosure has light-curing properties, after the light-curing treatment, the light-curing functional layer is cured to form a protective film layer that is completely matches the surface shape of the film to be stuck. Therefore, it can be effectively applied to display screens, functional glass and decorative films, and it is especially suitable for forming protective film on 2.5D and/or 3D display screens.

### BRIEF DESCRIPTION OF THE DRAWINGS

In order to more clearly explain the specific embodiments of the present disclosure or the technical solutions in the prior art, the following will briefly introduce the drawings that need to be used in the specific embodiments or the description of the prior art. Obviously, the drawings described below are some embodiments of the present disclosure. For those of ordinary skill in the art, other drawings can be obtained based on these drawings without creative work.
FIG. 1 is a schematic view of a cross-sectional structure of a composite light-curing protective film according to an embodiment of the present disclosure; wherein, FIG. A is a schematic view of a cross-sectional structure of the composite light-curing protective film according to an embodiment of the present disclosure, and FIG. B is a schematic view of the composite light-curing protective film according to an embodiment of the present disclosure;
FIG. 2 is a schematic view of another structure of a composite light-curing protective film according to an embodiment of the present disclosure;
FIG. 3 is a schematic view of the process flow of the film sticking method according to the embodiment of the present disclosure.

### DETAILED DESCRIPTION OF THE EMBODIMENTS

In order to make the technical problems, technical solutions, and beneficial effects to be solved by the present disclosure clearer, the following further describes the present disclosure in detail with reference to embodiments. It should be understood that the specific embodiments described here are only used to explain the present disclosure, but not to limit the present disclosure. Based on the embodiments of the present disclosure, all others embodiments obtained by those of ordinary skill in the art without creative work all belong to the protection scope of the present disclosure.

In this application, the term "and/or" describes the association relationship of the associated objects, indicating that there can be three types of relationships, for example, A and/or B, which means: A exists alone, A and B exist at the same time, and B exists alone. Wherein, A and B can be singular or plural. The character "/" generally indicates that the associated objects are in an "or" relationship.

In this application, "at least one" refers to one or more, and "multiple" refers to two or more than two. "The following at least one item" or similar expressions refers to any combination of these items, including any combination of single item or plural items. For example, "at least one of a, b, or c" or "at least one of a, b, and c" can mean: a, b, c, a-b (i.e., a and b), a-c, b-c, or a-b-c, where a, b, and c can be single or multiple respectively.

It should be understood that in the various embodiments of the present application, the size of the sequence number of the above-mentioned processes does not mean the order of execution. Some or all of the steps can be executed in parallel or one after the other, and the execution order of the processes should be determined based on their functions and the internal logic, and should not constitute any limitation on the implementation process of the embodiments of the present application.

The terms used in the embodiments of the present application are only for the purpose of describing specific embodiments, and are not intended to limit the present application. The singular forms "a" and "the" used in the embodiments of the present application and the appended claims are also intended to include plural forms, unless the context clearly indicates other meanings.

The weight of the relevant components mentioned in the description of the embodiments of this application can not only refer to the specific content of each component, but also can indicate the proportion of weight between the components. Therefore, it is within the scope disclosed in the specification of the embodiments of this application, as long as the content of the relevant components is scaled up or down according to the specification of the embodiments of this application. Specifically, the mass in the specification of the embodiments of the present application may be µg, mg, g, kg and other known mass units in the chemical industry.

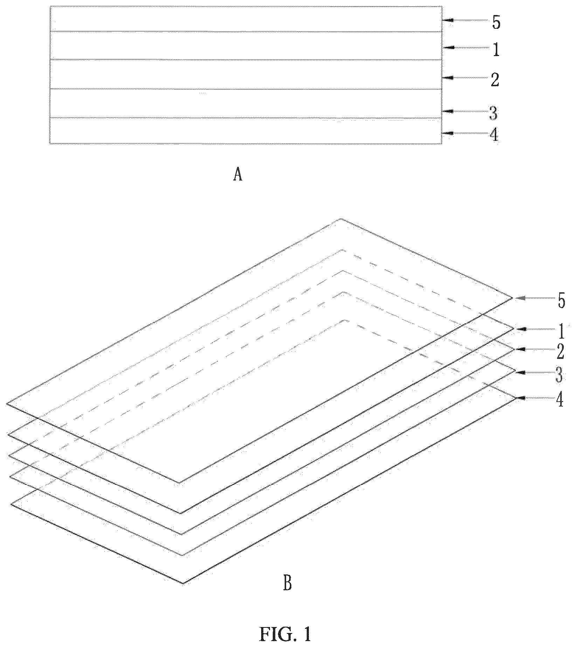

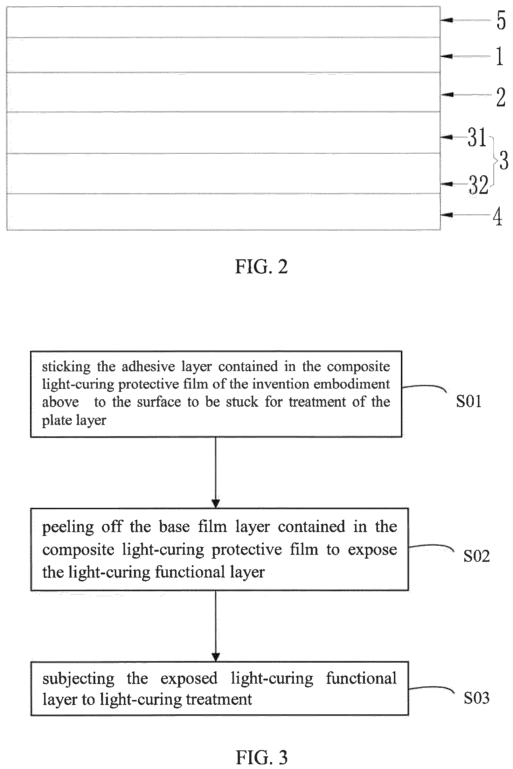

In one aspect, embodiments of the present disclosure provide a composite light-curing protective film. The structure of the composite light-curing protective film of the embodiment of the present disclosure is shown in FIG. 1 and FIG. 2, which includes a base film layer 1 that provides support, a light-curing functional layer 2 to be light-cured, and an adhesive layer 3, and the base film layer 1, the light-curing functional layer 2, and the adhesive layer 3 are laminated in sequence to form a sandwich structure.

The base film layer 1 is used as the base layer structure of the composite light-curing protective film in the embodiment of the present disclosure, which is used to provide a substrate supporting function to the light-curing functional layer 2, while giving the composite light-curing protective film mechanical properties to facilitate the composite light-curing protective film to position and stick on the surface of the film to be stuck, thereby improving the convenience of sticking the composite light-curing protective film to the surface of the film to be stuck, and improving the sticking effect between the composite light-curing protective film and the surface of the film to be stuck.

In an embodiment, the thickness of the base film layer 1 is 0.07-0.12 mm, and further is 0.1-0.12 mm. By controlling and adjusting the thickness of the base film layer 1, the effect of the structure of the base layer is enhanced, and the mechanical properties of the composite light-curing protective film are optimized to improve the positioning and sticking of the composite light-curing protective film on the surface to be stuck.

In another embodiment, the base film layer 1 is an opaque or poorly transparent film layer, such as a frosted film layer. In this way, in order to shade light, prevent the light from passing through the base film layer 1 to the photo-curing functional layer 2 in case the photo-curing functional layer 2 is photo-cured, and to prevent the photo-curing functional layer 2 from being cured before the composite photo-curing protective film is not stuck to the film to be stuck. Of course, the base film layer can be light-transmitting. At this time, the composite light-curing protective film should be kept away from light before use, to maintain the stability of the light-curing functional layer 2 so as to prevent being cured before the light-curing functional layer 2 is stuck to the surface of the film to be stuck.

In a specific embodiment, the material of the base film layer 1 contains at least one of PET and PVC, such as a frosted PET film layer.

The light-curing functional layer 2 contained in the composite light-curing protective film is used as the functional film layer of the composite light-curing protective film, and it has both the performance to be cured by light and the light-curing performance. In this embodiment, it should be understood that the light-curing functional layer 2 is not light-cured. Only after the composite light-curing protective film is stuck to the surface of the film to be stuck, the light-curing functional layer 2 is cured and shaped by exposure. Therefore, the light-curing functional layer 2 serves as the functional film layer of the composite light-curing protective film, which can effectively stick to the surface of the film to be stuck through the adhesive layer 3. Since the photo-curing functional layer 2 is not photo-cured, the photo-curing functional layer 2 can be effectively stuck in conformity with the shape of the surface of the film to be stuck. When the light-curing functional layer 2 is cured by exposure, the light-curing functional layer 2 can be effectively stuck to the surface of the film to be stuck, and the sticking stability can be ensured, without the problems of bounce-back and the difficulty of sticking.

The light-curing functional layer 2 is formed by film-forming a slurry containing the following parts by weight:
modified acrylic resin 25-35 parts
polymethyl methacrylate 10-15 parts
butyl acetate 15-25 parts
ethyl acetate 15-25 parts
isopropanol 10-20 parts
photoinitiator 1-5 parts
additive 2-4 parts.

The light-curing functional layer 2 formed by film-forming of the slurry of the formula has high light-curing performance, short curing time, uniform film quality, good transparency, and enhances the display effect of the surface to be stuck.

In the embodiment, the additive is silica. By selecting the types of additives, the light-curing performance of the light-curing functional layer 2 can be improved, the light-curing time can be shortened, the setting performance of the light-curing functional layer 2 after light-curing can be improved, and the surface sticking between the composite light-curing protective film and the film to be stuck can be enhanced.

In another embodiment, the thickness of the light-curing functional layer 2 is 0.05-0.125 mm, and further is 0.07-0.08 mm. By controlling and adjusting the thickness of the light-curing functional layer 2, the protective film formed after the light-curing functional layer 2 is exposed to the light has scratch resistance and drop resistance, and is firmly stuck to the surface of the film to be stuck without peeling off.

The adhesive layer 3 contained in the composite light-curing protective film functions as an adhesive layer, so that the light-curing functional layer 2 can be firmly stuck to the surface of the film to be stuck. In the embodiment, the thickness of the adhesive layer 3 is 0.02-0.12 mm. By controlling and adjusting the thickness of the adhesive layer 3, on the basis of effectively improving its adhesive effect, the light transmittance of the composite light-curing protective film is improved.

In the embodiment, as shown in FIG. 2, the adhesive layer 3 includes an adhesive transition layer 31 and a gluing layer 32, and the adhesive transition layer is laminated and combined with the light-curing functional layer 2, and the gluing layer is stuck to the surface of the film to be stuck. In a specific embodiment, the adhesive transition layer 31 may be a PET or TPU film layer, and the thickness may be 0.05-0.075 mm. The adhesive transition layer 31 can effectively enhance the sticking firmness between the gluing layer 32 and the light-curing functional layer 2 and at the same time play a role of fixing the gluing layer 32. The thickness of the gluing layer 32 may be 0.02-0.05 mm, and the material of the gluing layer 32 may be a silicone adhesive. Therefore, the adhesive layer 3 is provided in a composite layer structure including the adhesive transition layer 31 and the gluing layer 32, which can enhance the sticking strength between the adhesive layer 3 and the light-curing functional layer 2.

In a further embodiment, the composite light-curing protective film of the foregoing embodiments further includes a first protective layer 4. As shown in FIGS. 1 and 2, the first protective layer 4 is laminated on the surface of the adhesive layer 3 facing away from the light-curing functional layer 2. The first protective layer 4 is added to protect the adhesive layer 3 and maintain the good sticking performance of the adhesive layer 3. Wherein, in the embodiment, the thickness of the first protective layer 4 is 0.05-0.1 mm, and the first protective layer 4 can be a PET film layer or a release film layer. In a preferred embodiment, the first protective layer 4 is a release film layer and the PET film layer laminated with the release film layer, and the release film layer is stuck to the surface of the adhesive layer 3 or stuck to the gluing layer 32. Of course, other materials that can effectively protect the layer structure of the adhesive layer 3 are also within the scope of the disclosure in the embodiment of the present disclosure, such as a peeling layer.

In a further embodiment, the composite light-curing protective film of the foregoing embodiments further includes a second protective layer 5. As shown in FIG. 1 and FIG. 2, the second protective layer 5 is laminated on the surface of the base film layer 1 facing away from the light-curing functional layer 2. The second protective layer 5 is added to protect the base film layer 1. Wherein, in the embodiment, the thickness of the second protective layer 5 is 0.05-0.1 mm, and the material of the second protective layer 5 includes at least one of PET, PC, PP, and PVC. The second protective layer 5 formed of this material can better protect the surface of the base film layer 1.

Therefore, the composite light-curing protective film of the above embodiments is provided with a synergistic effect between the base film layer 1, the light-curing functional layer 2 and the adhesive layer 3, so that the composite light-curing protective film has a stable structure and can maintain a good light-curing performance and adhesion of the light-curing functional layer 2, making the composite light-curing protective film to be easily stuck to the surface of the film to be stuck, and the light-curing functional layer can be effectively stuck to the surface of the film to be stuck. Moreover, after the light-curing functional layer 2 is exposed and cured by light, the light-curing functional layer 2 can be effectively stuck to the surface of the film to be stuck, and the sticking stability can be ensured, without the problems of bounce-back and the difficulty of sticking.

In addition, the composite light-curing protective film of the above embodiments can prepare a layer structure according to the preparation method of the composite protective film, and then according to the lamination relationship of the layers contained in the composite light-curing protective film, the layers are stuck to prepare the composite light-curing protective film. Wherein, the light-curing functional layer 2 can be mixed with formula components contained in the light-curing functional layer 2 and then formed into a film according to a film forming process, such as directly forming a film on the surface of the base film layer 1.

Based on the structure and performance of the above composite light-curing protective film, the embodiment of the present disclosure also provides a film sticking method. The process flow of the film sticking method is shown in Fig. 3, combined with Fig. 1 and Fig. 2, including the following steps:
S01: sticking the adhesive layer 3 contained in the composite light-curing protective film of the present disclosure embodiment above to the surface of the film to be stuck;
S02: peeling off the base film layer 1 contained in the composite light-curing protective film to expose the light-curing functional layer 2;
S03: subjecting the light-curing functional layer 2 exposed in step S02 to light-curing.

Wherein, the composite light-curing protective film in step S01 is the composite light-curing protective film of the present disclosure embodiment described above. Therefore, in order to be brief, the structure of the composite light-curing protective film and the thickness and materials of each layer will not be described here again. When the composite light-curing protective film contains the first protective layer 4 as shown in FIGS. 1 and 2, the first protective layer 4 should be peeled off before the adhesive layer 3 is stuck to the surface of the film to be stuck, to expose the adhesive layer 3 so that it can be stuck to the surface of the film to be stuck.

In step S02, since the adhesive layer 2 has been stuck to the surface of the film in accordance with the filming requirements in step S01, the light-curing functional layer 2 cannot be influenced by the matrix mechanical action of the base film layer 1, so the base film layer 1 can be peeled off and removed, and peeling off the base film layer 1 can also directly expose the photo-curing functional layer 2 to facilitate the exposure processing of the photo-curing functional layer 2.

In step S03, the exposed light-curing functional layer 2 is exposed to light, so that the light-curing functional layer 2 is cured and shaped during the exposure process to form a protective film layer, and the cured protective film layer is stuck according on the shape of the surface to be stuck, which can ensure high sticking stability between the protective film layer and the surface of the film to be stuck, without the problems of bounce-back and the difficulty of sticking.

In the embodiment, the condition of the photo-curing treatment is the irradiation of a ultraviolet lamp with a wavelength of 365 for 30-60 s.

Therefore, the above film sticking method can also be referred to as the method for using the composite light-curing protective film, which is to directly sticking the adhesive layer 3 contained in the composite light-curing protective film with the surface of the film to be stuck, so that the light-curing functional layer 2 can be stuck in conformity with the shape of the surface to be stuck. After the photo-curing treatment, the photo-curing functional layer 2 is cured and shaped, and it will form a shape that completely matches the surface shape of the film to be stuck, thereby forming a protective film layer on the surface of the film to be stuck, and the protective film layer will not have the problems of bounce-back and the difficulty of sticking.

Since each of the above composite light-curing protective films has light-curing properties, and after the light-curing treatment, the light-curing functional layer 2 is cured and forms a protective film layer that completely matches the surface shape of the film to be stuck, so it can be effectively applied for the preparation of display screens, functional glass, and decorative films, particularly suitable for forming protective films on 2.5D and/or 3D display screens. The decorative film can be, but not only a decorative film in the automotive field.

Based on the above composite light-curing protective film and its sticking method and its application, the embodiment of the present disclosure also provides a display screen, functional glass and decorative film. The outer surfaces of the display screen and the functional glass are stuck with the composite light-curing protective film described above, and the adhesive layer 3 contained in the composite light-curing protective film is stuck to the outer surface of the display screen.

The decorative film contains the composite light-curing protective film described above.

Since the display screen, functional glass and decorative film contain the above composite light-curing protective film, the protective film contained in the display screen and functional glass can be effectively stuck to the display screen body without peeling. The decorative film can be effectively stuck to the surface of the article to be decorated, and the sticking stability can be ensured, without the problems of bounce-back and the difficulty of sticking.

The above technical solutions are illustrated by specific examples below.

### Embodiment 1

This embodiment provides a composite light-curing protective film, the structure of which is shown in FIG. 1, including a second protective layer 5, a base film layer 1, a light-curing functional layer 2, an adhesive layer 3, and a first protective layer 4 laminated in sequence. Wherein, the first protective layer 4 and the second protective layer 5 are PET film layers respectively; the base film layer 1 is a frosted PET film layer with a thickness of 0.1 mm; the thickness of the material of the light-curing functional layer 2 is 0.12 mm; the adhesive layer 3 is a silicone adhesive layer with a thickness of 0.05 mm. Wherein, the light-curing functional layer is formed by film-forming a slurry including the following parts by weight:
30 parts of modified acrylic resin, 12 parts of polymethyl methacrylate, 20 parts of butyl acetate, 20 parts of ethyl acetate, 15 parts of isopropanol, 3 parts of photoinitiator, 3 parts of additive. These components are mixed uniformly in proportion to form a slurry, and then a film layer is formed on the base film layer 1.

The method of sticking the composite light-curing protective film includes the following steps:
S1: peeling off and removing the first protective layer 4 contained in the composite light-curing protective film of the present embodiment, and sticking the adhesive layer 3 to the surface of the 3D display screen;
S2: peeling off the second protective layer 5 and the base film layer 1 to expose the light-curing functional layer 2;
S3: subjecting the exposed light-curing functional layer 2 to light-curing treatment to form a protective film layer on the surface of the 3D display screen that completely matches the shape of the surface of the 3D display screen. Wherein, the conditions of the light-curing treatment are the irradiation of a ultraviolet lamp with a wavelength of 365 for 40 s.

### Embodiment 2

This embodiment provides a composite light-curing protective film, the structure of which is shown in FIG. 1, including a second protective layer 5, a base film layer 1, a light-curing functional layer 2, an adhesive layer 3, and a first protective layer 4 laminated in sequence. Wherein, the first protective layer 4 and the second protective layer 5 are PET film layers respectively; the base film layer 1 is a frosted PET film layer with a thickness of 0.12 mm; the thickness of the material of the light-curing functional layer 2 is 0.09 mm; the adhesive layer 3 is a silicone adhesive layer with a thickness of 0.03 mm. Wherein, the light-curing functional layer is formed by film-forming a slurry including the following parts by weight:
25 parts of modified acrylic resin, 15 parts of polymethyl methacrylate, 25 parts of butyl acetate, 15 parts of ethyl acetate, 10 parts of isopropanol, 5 parts of photoinitiator, 4 parts of additive. These components are mixed uniformly in proportion to form a slurry, and then a film layer is formed on the base film layer 1.

The method of sticking the composite light-curing protective film includes the following steps:
S1: peeling off and removing the first protective layer 4 contained in the composite light-curing protective film of the present embodiment, and sticking the adhesive layer 3 to the surface of the 3D display screen;
S2: peeling off the second protective layer 5 and the base film layer 1 to expose the light-curing functional layer 2;
S3: subjecting the exposed light-curing functional layer 2 to light-curing treatment to form a protective film layer on the surface of the 3D display screen that completely matches the shape of the surface of the 3D display screen. Wherein, the conditions of the light-curing treatment are the irradiation of a ultraviolet lamp with a wavelength of 365 for 60 s.

### Embodiment 3

This embodiment provides a composite light-curing protective film, the structure of which is shown in FIG. 1, including a second protective layer 5, a base film layer 1, a light-curing functional layer 2, an adhesive layer 3, and a first protective layer 4 laminated in sequence. Wherein, the first protective layer 4 and the second protective layer 5 are PET film layers respectively; the base film layer 1 is a frosted PET film layer with a thickness of 0.07 mm; the thickness of the material of the light-curing functional layer 2 is 0.05 mm; the adhesive layer 3 is a silicone adhesive layer with a thickness of 0.08 mm. Wherein, the light-curing functional layer is formed by film-forming a slurry including the following parts by weight:
35 parts of modified acrylic resin, 10 parts of polymethyl methacrylate, 15 parts of butyl acetate, 25 parts of ethyl acetate, 20 parts of isopropanol, 1 part of photoinitiator, 2 parts of additive. These components are mixed uniformly in proportion to form a slurry, and then a film layer is formed on the base film layer 1.

The method of sticking the composite light-curing protective film includes the following steps:
S1: peeling off and removing the first protective layer 4 contained in the composite light-curing protective film of the present embodiment, and sticking the adhesive layer 3 to the surface of the 3D display screen;
S2: peeling off the second protective layer 5 and the base film layer 1 to expose the light-curing functional layer 2;
S3: subjecting the exposed light-curing functional layer 2 to light-curing treatment to form a protective film layer on the surface of the 3D display screen that completely matches the shape of the surface of the 3D display screen. Wherein, the conditions of the light-curing treatment are the irradiation of a ultraviolet lamp with a wavelength of 365 for 40 s.

### Embodiment 4

This embodiment provides a composite light-curing protective film, the structure of which is shown in FIG. 1. The difference of it from example 2 is that the adhesive layer 3 has an adhesive transition layer 31 and a gluing layer 32, and the adhesive transition layer 31 is laminated and combined with the light-curing functional layer 2, and the gluing layer is laminated and combined with the first protective layer 4. Wherein, the transition layer is a TPU film with a thickness of 0.06 mm, and the gluing layer is a TPU film with a thickness of 0.03 mm.

The method for sticking the composite light-curing protective film refers to the sticking method in Example 1.

### Comparative embodiment 1

### PET protective film

The 3D display screen with the composite light-curing protective film provided in Embodiment 1 to 4 and the 3D display screen with the PET protective film provided in Comparative embodiment 1 were stuck according to the film sticking method in the foregoing Embodiment 1 to 4 and tested in accordance with industry testing methods. After testing, it was found that the protective film contained in the 3D display screen with the composite light-curing protective film provided in the present embodiment 1 to 4 is completely stuck to the 3D curved surface of the 3D display screen, without peeling, but the 3D display screen with the PET protective film of Comparative embodiment 1 containing the PET protective film has peeling problem with the 3D curved surface of the 3D display screen, especially on the curved surface of the 3D display screen, such as bubbling, poor sticking, warping, white edges, etc.

The above are only the preferred embodiments of the present disclosure and are not intended to limit the present disclosure.

## Claims

1. A composite light-curing protective film, comprising:
a base film layer that provides support,
a light-curing functional layer to be light-cured, and
an adhesive layer, wherein
the base film layer, light-curing functional layer, and the adhesive layers are laminated in sequence to form a sandwich structure, and
the light-curing functional layer is formed by film-forming a slurry, including the following ingredients in parts by weight:
modified acrylic resin 25-35 parts,
polymethyl methacrylate 10-15 parts,
butyl acetate 15-25 parts,
ethyl acetate 15-25 parts,
isopropanol 10-20 parts,
photoinitiator 1-5 parts, and
additives 2-4 parts.

2. The composite light-curing protective film according to claim 1, wherein a thickness of the light-curing functional layer is 0.05-0.125 mm.

3. The composite light-curing protective film according to claim 1, wherein a thickness of the base film layer is 0.07-0.12 mm; or/and
the material of the base film layer contains at least one of PET and PVC.

4. The composite light-curing protective film according to claim 1, wherein a thickness of the adhesive layer is 0.02-0.12 mm; or/and
the adhesive layer comprises an adhesive transition layer and a gluing layer, and the adhesive transition layer is laminated and combined with the light-curing functional layer, and the gluing layer is stuck to a surface where the composite light-curing protective film to be stuck.

5. The composite light-curing protective film according to claim 1, further comprising a first protective layer, the first protective layer being laminated on a surface of the adhesive layer facing away from the light-curing functional layer.

6. The composite light-curing protective film according to claim 5, further comprising a second protective layer, the second protective layer being laminated on a surface of the base film layer facing away from the light-curing functional layer.

7. A method of sticking a film, comprising the following steps:
sticking the adhesive layer contained in the composite light-curing protective film of any one of claims 1-6 to a surface where the composite light-curing protective film to be stuck;
peeling off the base film layer contained in the composite light-curing protective film to expose the light-curing functional layer; and
subjecting the exposed light-curing functional layer to light-curing treatment.

8. The method of sticking a film according to claim 7, wherein a condition of the light-curing treatment is irradiation of an ultraviolet lamp with a wavelength of 365 nm for 30-60 s.

9. A use of the composite light-curing protective film according to any one of claims 1-6 in the preparation of display screens, functional glass, and decorative films.

## Patentansprüche

1. Lichthärtende Verbundstoff-Schutzfolie umfassend:
eine Folien-Basisschicht, die Stützung bereitstellt,
eine lichthärtende Funktionsschicht zur Lichthärtung, und
eine Haftschicht, wobei
die Folien-Basisschicht, die lichthärtende Funktionsschicht und die Haftschicht aufeinanderfolgend laminiert sind, um eine Sandwichstruktur zu bilden, und
die lichthärtende Funktionsschicht durch Filmbildung einer Aufschlämmung, die folgende Inhaltsstoffe in Gewichtsteilen enthält, gebildet ist:
modifiziertes Acrylharz 25-35 Teile,
Polymethylmethacrylat 10-15 Teile,
Butylacetat 15-25 Teile,
Ethylacetat 15-25 Teile,
Isopropanol 10-20 Teile,
Photoinitiator 1-5 Teile und
Zusatzstoffe 2-4 Teile.

2. Lichthärtende Verbundstoff-Schutzfolie gemäß Anspruch 1, wobei eine Dicke der lichthärtenden Funktionsschicht 0,05-0,125 mm beträgt.

3. Lichthärtende Verbundstoff-Schutzfolie gemäß Anspruch 1, wobei eine Dicke der Folien-Basisschicht 0,07-0,12 mm beträgt; und/oder
das Material der Folien-Basisschicht wenigstens eines von PET und PVC enthält.

4. Lichthärtende Verbundstoff-Schutzfolie gemäß Anspruch **1,** wobei eine Dicke der Haftschicht 0,02-0,12 mm beträgt; und/oder
die Haftschicht eine haftfähige Übergangsschicht und eine Klebeschicht umfasst und die haftfähige Übergangsschicht mit der lichthärtenden Funktionsschicht laminiert und kombiniert ist und die Klebeschicht an eine Oberfläche geklebt ist, an die die lichthärtende Schutzfolie geklebt werden soll.

5. Lichthärtende Verbundstoff-Schutzfolie gemäß Anspruch 1, ferner umfassend eine erste Schutzschicht, wobei die erste Schutzschicht an eine Oberfläche der Klebeschicht laminiert ist, die von der lichthärtenden Funktionsschicht weg zeigt.

6. Lichthärtende Verbundstoff-Schutzfolie gemäß Anspruch 5, ferner umfassend eine zweite Schutzschicht, wobei die zweite Schutzschicht an eine Oberfläche der Folien-Basisschicht laminiert ist, die von der lichthärtenden Funktionsschicht weg zeigt.

7. Verfahren zum Kleben einer Folie, umfassend die folgenden Schritte:
Kleben der Klebeschicht, die in der lichthärtenden Verbundstoff-Schutzfolie gemäß einem der Ansprüche 1-6 enthalten ist, an eine Oberfläche, an die die lichthärtende Verbundstoff-Schutzfolie geklebt werden soll;
Abziehen der Folien-Basisschicht, die in der lichthärtenden Verbundstoff-Schutzfolie enthalten ist, um die lichthärtende Funktionsschicht freizulegen; und
Unterwerfen der freiliegenden lichthärtenden Funktionsschicht an Lichthärtungsbehandlung.

8. Verfahren zum Kleben einer Folie gemäß Anspruch 7, wobei eine Bedingung der Lichthärtungsbehandlung Bestrahlung einer Ultraviolettlampe mit einer Wellenlänge von 365 nm für 30-60 s ist.

9. Verwendung der lichthärtenden Verbundstoff-Schutzfolie gemäß einem der Ansprüche 1-6 bei der Herstellung von Anzeigebildschirmen, Funktionsglas und Dekorfolien.

## Revendications

1. Film protecteur durcissant à la lumière composite, comprenant :
une couche de film de base fournissant un support,
une couche fonctionnelle durcissant à la lumière devant être durcie à la lumière, et
une couche d'adhésif,
la couche de film de base, la couche fonctionnelle durcissant à la lumière, et les couches d'adhésif étant stratifiées en séquence pour former une structure en sandwich, et
la couche fonctionnelle durcissant à la lumière étant formée par formation de film à partir d'une suspension, comprenant les ingrédients suivants en parties en poids :
résine acrylique modifiée 25 à 35 parties,
poly(méthacrylate de méthyle) 10 à 15 parties,
acétate de butyle 15 à 25 parties,
acétate d'éthyle 15 à 25 parties,
isopropanol 10 à 20 parties,
photoinitiateur 1 à 5 parties, et
additifs 2 à 4 parties.

2. Film protecteur durcissant à la lumière composite selon la revendication 1, une épaisseur de la couche fonctionnelle durcissant à la lumière étant de 0,05 à 0,125 mm.

3. Film protecteur durcissant à la lumière composite selon la revendication 1, une épaisseur de la couche de film de base étant de 0,07 à 0,12 mm ; et/ou
le matériau de la couche de film de base contenant au moins l'un parmi PET et PVC.

4. Film protecteur durcissant à la lumière composite selon la revendication 1, une épaisseur de la couche d'adhésif étant de 0,02 à 0,12 mm ; et/ou
la couche d'adhésif comprenant une couche de transition adhésive et une couche collante, et la couche de transition adhésive étant stratifiée et combinée avec la couche fonctionnelle durcissant à la lumière, et la couche collante étant collée sur une surface où le film protecteur durcissant à la lumière composite doit être collé.

5. Film protecteur durcissant à la lumière composite selon la revendication 1, comprenant en outre une première couche protectrice, la première couche protectrice étant stratifiée sur une surface de la couche d'adhésif opposée à la couche fonctionnelle durcissant à la lumière.

6. Film protecteur durcissant à la lumière composite selon la revendication 5, comprenant en outre une deuxième couche protectrice, la deuxième couche protectrice étant stratifiée sur une surface de la couche de film de base opposée à la couche fonctionnelle durcissant à la lumière.

7. Procédé de collage d'un film, comprenant les étapes suivantes :
collage de la couche d'adhésif contenue dans le film protecteur durcissant à la lumière composite selon l'une quelconque des revendications 1 à 6 sur une surface où le film protecteur durcissant à la lumière composite doit être collé ;
pelage de la couche de film de base contenue dans le film protecteur durcissant à la lumière composite pour exposer la couche fonctionnelle durcissant à la lumière ; et
soumission de la couche fonctionnelle durcissant à la lumière exposée à un traitement de durcissement à la lumière.

8. Procédé de collage d'un film selon la revendication 7, une condition du traitement de durcissement à la lumière étant une irradiation **d'une** lampe à ultraviolets dotée **d'une** longueur d'onde de 365 nm pendant 30 à 60 **s.**

9. Utilisation du film protecteur durcissant à la lumière composite selon l'une quelconque des revendications 1 à 6 dans la préparation d'écrans d'affichage, de verre fonctionnel et de films décoratifs.
